# FASCICULE DE BREVET EUROPEEN

(11) **EP 1 612 063 B1**
(45) Date de publication et mention de la délivrance du brevet: **19.09.2007**
(21) Numéro de dépôt: 05104673.8
(22) Date de dépôt: 31.05.2005
(51) Int. Cl.: B60C 25/00

(54) **Dispositif de démontage d'un pneumatique sur jante à sièges inclines vers l'extérieur**
Vorrichtung zum Demontieren eines Reifens von einer Felge mit nach aussen geneigten Schultern
Device to dismount a tyre form a rim having outward sloping seats

(30) Priorité: 29.06.2004 FR 0407159
(43) Date de publication de la demande: 04.01.2006
(73) Titulaire: Société de Technologie Michelin, 63000 Clermont-Ferrand (FR); Michelin Recherche et Technique S.A., 1763 Granges-Paccot (CH)
(72) Inventeur: Balichard, René, F-63530 Sayat (FR); Gaillardon, Romuald, F-18400 Saint-Caprais (FR); Drieux, Jean-Jacques, F-63530 Volvic (FR); Jardine, David, F-63000 Clermont-Ferrand (FR)
(74) Mandataire: Diernaz, Christian

(56) Documents cités:
- EP-A1- 1 194 305
- DE-C1- 3 910 807

## Description

La présente invention a pour objet un dispositif servant au démontage de sa jante de service d'un ensemble formé d'une part, d'un pneumatique à armature de carcasse et, d'autre part, d'un anneau de soutien amovible, et plus particulièrement, d'un ensemble destiné à être monté sur une jante d'une seule pièce dont au moins un des sièges est incliné vers l'extérieur.

On trouve dans les brevets français FR 2 699 121, FR 2 713 557 et FR 2 713 558, la description d'une telle jante. Cette jante a, vue en section méridienne (c'est-à-dire dans un plan contenant l'axe de rotation), un premier siège ayant deux extrémités, l'extrémité axialement à l'extérieur étant à une distance de l'axe de rotation inférieure à la distance à laquelle se trouve l'extrémité axialement intérieure du même siège (un tel siège est dit "incliné vers l'extérieur"), une portée plus ou moins grande destinée à recevoir un anneau de soutien amovible, éventuellement une gorge de montage, et un deuxième siège de jante, soit identique (incliné vers l'extérieur), soit différent du premier siège de jante (c'est-à-dire incliné vers l'intérieur).

Chaque siège de jante incliné vers l'extérieur comprend une partie formant rebord (situé axialement à l'intérieur dudit siège) pour équilibrer les efforts axiaux dus à la pression interne de gonflage d'un pneumatique monté sur la jante et un hump ou saillie de faible hauteur (plus petite que la hauteur du rebord de jante) pour maintenir le bourrelet d'un pneumatique en place sur le siège même dans le cas d'une pression faible ou nulle dans le pneumatique.

Cette jante forme, avec un anneau de soutien amovible et un pneumatique ayant un profil méridien d'armature de carcasse adapté et de bourrelets de géométrie appropriée pour venir en contact avec les sièges de la jante, un ensemble roulant performant dans le cas d'un roulage à faible pression voire même à pression nulle. Par performant, on entend que le pneumatique reste en place sur sa jante dans ces conditions particulières sans qu'il y ait de déjantage (perte de contact des bourrelets du pneumatique avec les sièges de jante) et donc de risque de perte de contrôle du véhicule équipé avec ce type de pneumatique.

Le brevet EP 1194305 décrit un procédé de démontage d'un tel ensemble pneumatique par la mise en place d'une réglette de section triangulaire entre un siège de bourrelet du pneumatique et un siège de jante incliné vers l'extérieur, cette section ayant, une fois en place, une hauteur voisine ou supérieure à la hauteur du hump (ou saillie). De cette manière, le bourrelet se trouve en partie radialement à l'extérieur du hump et peut être poussé axialement vers l'extérieur soit par un galet presseur agissant sur le côté opposé, soit par l'action d'un levier inséré entre ladite réglette et le bourrelet du pneumatique.

Comme il est précisé dans ce document, la longueur de la réglette doit être choisie pour concilier à la fois le besoin d'éloigner radialement le bourrelet de son siège afin de pouvoir le faire passer par dessus le hump et celui de ne pas trop contraindre le bourrelet en créant de trop fortes pressions de contact entre bourrelet et siège de jante. Dans ce but, la longueur doit être adaptée (si cette longueur est trop grande, la surpression de contact est telle qu'il peut devenir impossible d'effectuer le démontage).

Il a été constaté que la mise en place de la réglette était une opération délicate nécessitant une attention soutenue et pouvait nécessiter plusieurs tentatives, ladite réglette ayant tendance soit à ne pas vouloir s'engager dès le début soit à ne pas vouloir s'engager sur la totalité de sa longueur. Pour cette mise en place, on utilise en général un galet presseur pour appuyer axialement vers l'intérieur sur l'un des bourrelets et ainsi le faire basculer autour de son talon (le talon correspondant à la partie du bourrelet axialement à l'intérieur en contact avec un rebord de jante) afin de créer un espace entre ledit bourrelet et le siège de jante correspondant. À l'intérieur de cet espace, on introduit une extrémité d'une réglette. Ensuite, en déplaçant le galet presseur sur le bourrelet, on cherche à faire rentrer la réglette en totalité entre le bourrelet et le siège de jante. Dans cette deuxième opération, il n'est pas rare que la réglette ne s'engage pas correctement et dans ces cas, il faut recommencer la mise en place de la réglette.

Le dispositif de l'invention permet de résoudre ce problème.

Dans ce but, il est proposé un dispositif destiné au démontage d'un pneumatique d'une jante dont un siège au moins est incliné vers l'extérieur, ce dispositif permettant une mise en place aisée et ne nécessitant quasiment plus le maintien par un opérateur pendant toute l'opération d'insertion du dispositif.

Un dispositif selon l'invention a la forme d'un insert de longueur L présentant trois faces principales et dont la section dans un plan de coupe transversal est globalement triangulaire avec un contour formé de deux grands côtés et un petit côté, l'angle fait par les grands côtés étant proche de l'angle des sièges de jante avec l'axe de rotation. Ces deux grands côtés et le petit côté correspondent aux intersections des faces principales avec un plan de coupe transversal. Par ailleurs, la longueur du petit côté est sensiblement égale à la hauteur de la saillie ou hump du siège de jante incliné vers l'extérieur. Pour obtenir un montage aisé, la face de l'insert destinée à venir en contact avec un siège de bourrelet est pourvue d'au moins un relief destiné à interagir avec ledit siège de bourrelet de façon à maintenir l'insert engagé avec le bourrelet pendant la phase de mise en place dudit insert entre ledit bourrelet et le siège de jante.

Par relief, on entend soit une forme en creux réalisée sur la face de l'insert soit une forme faisant saillie sur cette face. La combinaison de creux et de saillies fait, bien entendu, partie de la portée de l'invention.

Au moins un relief est formé sur une face de l'insert de manière continue (c'est-à-dire quasiment d'une extrémité à l'autre dudit insert) ou de manière discontinue (c'est-à-dire par exemple en réalisant une succession de reliefs dans la direction de la plus grande dimension de l'insert).

Dans une variante, au moins la face de l'insert en contact avec le bourrelet comporte une rainure creusée sur toute sa largeur.

Dans une autre variante, au moins la face de l'insert en contact avec le bourrelet comporte au moins une rainure creusée sur une partie seulement de sa largeur ; l'avantage de cette variante réside dans la présence d'une rainure localisée n'affectant pas l'opération ultérieure d'extraction du bourrelet par glissement axial au dessus de l'insert.

Préférentiellement, chaque rainure a les dimensions suivantes :
- une profondeur comprise entre 0.2 et 1.0 mm ;
- une largeur égale à au moins 2 mm et au plus à 5 mm.

On a également constaté qu'il est préférable de positionner longitudinalement la rainure entre la moitié de la largeur de la face en contact avec le bourrelet et la face latérale sensiblement perpendiculaire au siège de jante.

Dans le cas où la machine de montage et démontage ne possède pas de galet pouvant exercer une poussée suffisante, il est alors avantageux d'utiliser un levier de montage pour déloger le premier bourrelet. Dans une telle situation, l'insert de démontage est constitué de deux tronçons réunis par une partie intermédiaire formant une encoche en décalage par rapport à la surface des deux tronçons en contact avec le bourrelet. Ce décalage permet l'introduction d'un levier entre le bourrelet et la jante comme cela est décrit dans le brevet EP 1194305. Selon l'invention et pour faciliter la mise en place de l'insert, chacun des deux tronçons de l'insert est pourvu sur sa face destinée à être en contact avec le bourrelet avec au moins un relief pour interagir avec ledit bourrelet.

L'insert de démontage peut être en matériau plastique tel que le polyéthylène, le polyuréthanne ou autre plastique connu, tel notamment le "ZYTEL ® " (polyamide 6-6). Il peut être aussi en matériau élastomérique de dureté Shore A appropriée, comprise entre 60 et 95 points.

L'invention est illustrée de manière non limitative par les dessins annexés à la présente description et montrant diverses variantes de réalisation. Sur ces dessins :

la figure 1 montre une vue en coupe d'un bourrelet d'un pneumatique en place sur un siège de jante avant mise en place d'un insert selon l'invention ;

la figure 2 montre une vue en coupe d'un bourrelet d'un pneumatique en place sur un siège de jante après mise en place d'un insert selon l'invention ;

la figure 3A montre une vue en coupe de l'insert de la figure 2 ;

les figures 3B, 3C montrent deux autres variantes d'inserts selon l'invention ;

la figure 4 montre une autre variante d'insert selon l'invention liée à l'usage d'un levier de démontage.

Dans un souci de clarté, les références indiquant des parties identiques ou similaires sont conservées dans toutes les figures décrites dans ce qui suit.

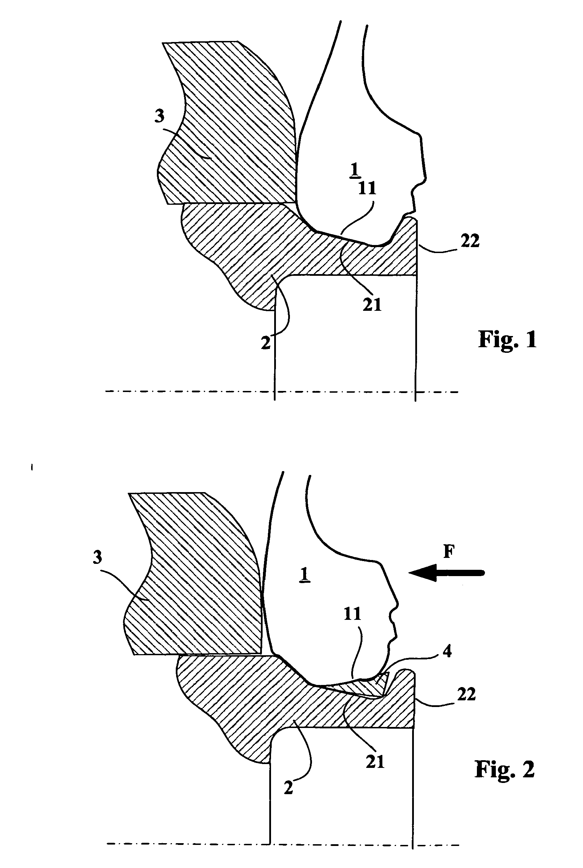

La figure 1 montre une vue partielle en coupe méridienne (c'est-à-dire dans un plan contenant l'axe de rotation du pneumatique) d'un bourrelet 1 d'un pneumatique monté sur une jante de montage 2, ce bourrelet ayant un siège 11 destiné à être en contact avec un siège de jante. Cette jante 2 comprend des sièges 21, dont un au moins desdits sièges présente une inclinaison vers l'extérieur (comme montré sur la figure 1), c'est-à-dire dont les points axialement à l'extérieur sont sur un cercle de diamètre inférieur au diamètre du cercle sur lequel sont positionnés les points du siège axialement les plus à l'intérieur. Ce siège 21 incliné vers l'extérieur comprend axialement à l'extérieur une saillie 22 de faible hauteur (ou hump) dont la fonction est de maintenir axialement en place le bourrelet 1 lorsque le pneumatique est utilisé avec une faible pression de gonflage voire même sans pression. On distingue en outre sur cette figure un anneau interne de soutien 3 destiné à supporter tout ou partie de la charge agissant sur le pneumatique dans le cas d'une perte de pression.

Pour démonter ce pneumatique de sa jante, on fait basculer localement le bourrelet au moyen d'un outil (non représenté sur la figure 2) agissant sur l'un des flancs du pneumatique (une flèche F indique sur la figure 2 la direction de son action), puis on met en place un insert ayant la forme d'un insert 4 allongé dont on ne voit qu'une section transversale sur la figure 2.

L'insert 4 de longueur appropriée es t intercalé entre le bourrelet 1 et le siège 21 de la jante. On a développé des inserts de 330 mm pour des pneumatiques dont les sièges de jante ont un diamètre de 420 mm. Cette même longueur peut, bien entendu, être utilisée pour d'autres diamètres de siège, comme par exemple 460 mm. D'autres longueurs ont été testées avec succès, à savoir, 380 m et 420 mm ; ces inserts de longueur 380 mm et 420 mm pouvant être employés, notamment, pour des sièges ayant des diamètres de 420 à 540 mm.

Pour rappel, la mise en place de l'insert se fait en deux temps : dans un premier temps, on introduit une extrémité de l'insert dans un espace formé entre le bourrelet et la jante par l'action d'un outil approprié exerçant une poussée axiale F puis dans un second temps, on déplace cet outil dans la direction circonférentielle tout en maintenant la poussée pour déplacer circonférentiellement l'espace entre ledit bourrelet et ladite jante et faire rentrer progressivement l'insert sur toute sa longueur.

La section de l'insert 4 est sensiblement triangulaire et présente deux grands côtés 41, 42, l'un desdits grands côtés 42 étant plaqué contre le siège 21 de jante et l'autre grand côté 41 contre le siège 11 de bourrelet 1 (c'est-à-dire la partie du bourrelet en contact avec le siège de jante) ; ses deux grands côtés sont réunis axialement à l'extérieur par un petit côté 43. Ce petit côté 43 est destiné à venir en contact avec la saillie 22. L'angle que font les deux grands côtés 41, 42 entre eux est voisin de l'angle d'inclinaison du siège de jante avec la direction axiale (c'est-à-dire la direction de rotation). Par ailleurs la longueur du petit côté 43 est appropriée afm de faciliter le passage du bourrelet par-dessus ladite saillie.

Après mise en place complète de l'insert 4, une poussée axiale est alors exercée localement sur l'autre flanc (non représenté) du pneumatique de manière à venir pousser sur le bourrelet 1 en contact avec l'insert 4 par l'intermédiaire de l'anneau interne de soutien 3. Par son excentrement radial sur l'insert 4, le bourrelet 1 est aisément poussé axialement vers l'extérieur, permettant alors le démontage complet du pneumatique.

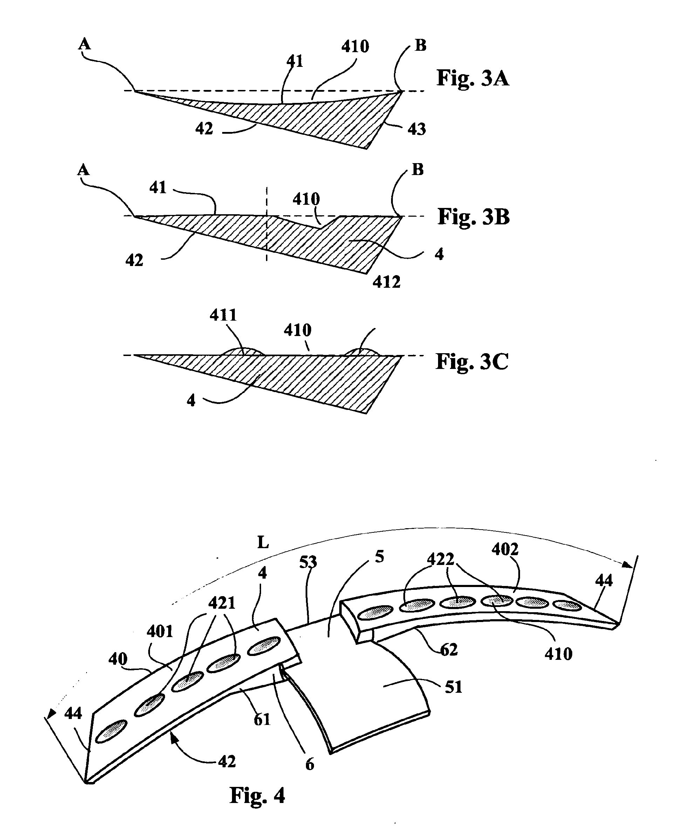

La figure 3A montre de manière agrandie la forme de la section transversale de l'insert 4 employé dans l'exemple illustré avec la figure 2. Dans le plan de la figure 3A, le grand côté 41 destiné à être en contact avec le siège 11 de bourrelet 1 comprend une rainure 410 dont la largeur correspond à la distance séparant les points d'extrémité A et B dudit grand côté 41. La longueur du segment de droite AB est dans l'exemple égale à 11 mm tandis que la longueur du petit côté est d'environ 5 mm. La forme de la rainure dans le plan de coupe est celle d'un arc de cercle.

La flèche maximale (correspondant à la profondeur maximale du creux mesurée par rapport à une droite virtuelle passant par les points A et B dans le plan de la figure) est préférentiellement supérieure à 0.2 mm et inférieure à 1.0 mm.

Ce profil en creux est présent sur toute la longueur de l'insert (cela signifie que toute section a une forme identique ou similaire). Bien entendu, l'effet technique peut être obtenu avec un insert ayant une rainure qui ne serait pas continue dans le sens de la plus grande dimension de l'insert.

Une variante à l'insert qui vient d'être décrit consiste à faire varier la profondeur du creux en fonction de la position considérée sur ledit insert dans la direction de sa longueur.

Dans d'autres variantes, comme par exemple celles représentées aux figures 3B ou 3C, le relief de la face de l'insert destinée à être en contact avec le siège de bourrelet, vu dans un plan de coupe identique à celui de la figure 2, n'affecte pas la totalité de la distance séparant les extrémités (A) et (B) du grand côté 41, comme dans l'exemple de la figure 3A, mais est localisé.

Notamment, la figure 3B montre une variante intéressante en ce sens que la face destinée à être en contact avec le siège de bourrelet est plane et pourvue avec une rainure 410 qui est, vue en coupe transversale, localisée entre le milieu du segment AB joignant les extrémités du grand côté et son extrémité B à l'intersection avec le petit côté 43. Cette variante est intéressante puisqu'elle permet une mise en place aisée et efficace tout en conservant une grande surface plane en contact avec le siège de bourrelet, ce qui a pour avantage de réduire les poussées axiales qui doivent être exercées sur les bourrelets dans la phase d'extraction.

La rainure formée sur l'insert a une profondeur égale à 0.5 mm. On a montré qu'une profondeur allant jusqu'à 1 mm pouvait être satisfaisante puisqu'elle concilie à la fois une bonne efficacité de mise en place de l'insert et une bonne résistance mécanique dudit insert à de nombreuses utilisations. Pour les mêmes raisons, la largeur de la rainure est ici comprise entre 2 et 5 mm, alors que le segment AB a une longueur égale à 11 mm.

La rainure de la figure 3B a dans le cas présenté un profil dissymétrique dans le plan de cette figure ; bien entendu, le même effet peut être atteint avec une rainure à profil symétrique.

Dans le cas montré à la figure 3B, comme dans le cas présenté avec la figure 3A, la rainure 410 est continue tout le long de l'insert ; l'effet technique est toutefois également obtenu avec une rainure discontinue. Par discontinue, on entend une rainure qui est formée d'une succession de rainures ou encore d'une rainure ne s'étendant pas sur toute la longueur de la face destinée à être en contact avec un bourrelet.

Par discontinue, on entend par exemple une succession de rainures dans la direction de la plus grande dimension de l'insert ou encore une rainure qui n'affecterait pas la totalité de la longueur de l'insert.

Sur la figure 3C, on distingue une autre variante d'un insert 4 pourvu sur sa face 41 destinée à être en contact avec le siège de bourrelet avec deux protubérances 411, 412 faisant saillie sur ladite face, ces protubérances formant avec l'espace les séparant une rainure 410 pour coopérer avec le siège de bourrelet lors de l'introduction de cet insert entre ledit bourrelet et le siège de jante. La hauteur de ces protubérances 411, 412 est sensiblement égale à la profondeur de la rainure des précédentes variantes.

Comme variante à cet exemple, on peut envisager de réaliser chaque protubérance comme une succession de protubérances disjointes dans la direction de la plus grande dimension de l'insert (cette direction correspondant à la direction d'introduction de l'insert entre le bourrelet et le siège de jante).

La figure 4 montre en perspective une autre variante d'un dispositif de démontage adapté au cas où ledit démontage nécessite un outil de type levier ou crochet pour venir s'insérer entre le bourrelet et le siège de jante dans le but de soulever radialement et tirer axialement sur le bourrelet afin de lui faire franchir la saillie de la jante et ainsi démonter le pneumatique de sa jante.

Dans ce cas, le dispositif de démontage se présente sous la forme d'un insert 4 comportant deux demi inserts 401 et 402 réunis entre eux par une partie intermédiaire 5 dépourvue de relief et ne coopérant pas ou peu avec le siège de bourrelet pour la mise en place dudit insert. Cette partie intermédiaire 5 est en creux par rapport aux faces des demi inserts destinés à être en contact avec un siège de bourrelet.

Chacune des demi inserts 401, 402 comporte un relief respectivement, destiné à coopérer avec le siège de bourrelet pour faciliter la mise en place de l'insert. Dans le cas d'espèce, chaque demi insert 401, 402 comprend une pluralité de cavités 421, 422 de forme allongée dans la direction de la plus grande dimension desdites demi inserts, ces cavités étant disposées dans ladite direction et selon sensiblement une même ligne.

Par ailleurs et pour faciliter l'introduction d'une extrémité de cet insert 4 entre le bourrelet et la jante, il est avantageux que ladite extrémité comporte une partie en biseau 44 dont l'angle avec la direction de la plus grande dimension L de l'insert 4 est compris entre 10° et 70° (par convention, l'angle est de 90° quand il n'y a pas de biseau). Cette disposition avantageuse est tout à fait applicable aux inserts décrits précédemment avec le support des figures 3A à 3C. Préférentiellement, l'angle de biseau est sensiblement égal à 45°.

La partie intermédiaire 5 reliant les deux demi inserts comprend une extension transversale 51 utile pour protéger la saillie de la jante des coups de leviers. Cette partie intermédiaire 5 est en décalage par rapport à la face de l'insert en contact avec le siège de bourrelet, ceci afm de laisser un espace permettant l'introduction d'une extrémité d'un outil destiné à écarter localement le bourrelet de la jante dans une direction radiale puis à extraire axialement ledit bourrelet par-dessus la saillie de la jante. Comme montré sur la figure 4, cette partie intermédiaire 5 comprend sur la face 42 de l'insert destinée à être en contact avec le siège de jante un renforcement 6 pour assurer la liaison mécanique entre les demi inserts, ce renforcement 6 étant formé par une surépaisseur s'étendant sur chacune des deux demi inserts ; ce renforcement 6 présente une variation régulière d'épaisseur près de ses extrémités 61 et 62 situées sur chacune des demi inserts 401, 402.

Pour faciliter l'introduction du levier ou du crochet de démontage, il est judicieux de prévoir que l'arête 53 de la partie intermédiaire 5 soit décalée vers l'intérieur de l'insert par rapport à l'arête 40 d'intersection des grands côtés 41 et 42 des demi inserts 401 et 402.

Bien entendu, les variantes présentées ici à titre d'illustration de l'invention ne doivent pas être considérées comme limitatives et toute combinaison des caractéristiques desdites variantes fait partie de la présente invention. Par exemple, les demi inserts de la dernière variante (figure 4) peuvent être pourvus de relief identiques à ceux des variantes précédentes (figures 3A à 3C).

## Revendications

1. - Dispositif destiné au démontage d'un pneumatique d'une jante (2) dont un siège (21) au moins est incliné vers l'extérieur, ce siège étant pourvu axialement vers l'extérieur par une saillie (22) de faible hauteur, ce dispositif ayant la forme d'un insert (4) de longueur (L) présentant trois faces principales et dont la section dans un plan de coupe transversal est globalement triangulaire avec un contour formé par deux grands côtés (41, 42) et un petit côté (43), l'angle fait par les grands côtés étant proche de l'angle des sièges de jante avec l'axe de rotation, la longueur du petit côté (43) étant sensiblement égale à la hauteur de la saillie (22) du siège (21) de jante incliné vers l'extérieur, cet insert (4) étant **caractérisé en ce que** la face (42) dudit insert destinée à venir en contact avec un siège (11) de bourrelet (1) est pourvue d'au moins un relief (410) destiné à interagir avec ce siège (11) de bourrelet de façon à maintenir l'insert (4) engagé entre ce bourrelet (1) et la jante (2) pendant la phase d'introduction dudit insert (4) entre ledit siège de bourrelet et ladite jante.

2. - Dispositif de démontage selon la revendication 1 **caractérisé en ce que** le relief (410) consiste en une rainure s'étendant dans la direction de la longueur de l'insert (4), cette rainure ayant une largeur égale à la distance séparant les extrémités (A) et (B) du grand côté (41) destiné à être en contact avec un siège (11) de bourrelet.

3. - Dispositif de démontage selon la revendication 1 **caractérisé en ce que** le relief (410) consiste en une rainure de largeur inférieure à la distance séparant les extrémités (A) et (B) du grand côté (41) destiné à être en contact avec un siège de bourrelet.

4. - Dispositif de démontage selon la revendication 3 **caractérisé en ce que**, vue en coupe transversale, la rainure (410) est située entre le milieu du grand côté destiné à être en contact avec un siège de bourrelet et le petit côté.

5. - Dispositif de démontage selon la revendication 3 ou la revendication 4 **caractérisé en ce que** la rainure (410) est formée par deux protubérances (411, 412), lesdites protubérances étant en relief sur la face destinée à être en contact avec un siège (11) de bourrelet.

6. - Dispositif de démontage selon l'une quelconque des revendications précédentes 1 à 5 **caractérisé en ce que** l'une au moins des extrémités de l'insert (4) comprend une partie en biseau (51), l'angle dudit biseau avec la direction de la plus grande dimension de l'insert étant au moins égal à 10° et au plus égal à 70°.

7. - Dispositif de démontage selon la revendication 6 **caractérisé en ce que** l'angle de biseau (51) est sensiblement égal à 45°.

8. - Dispositif de démontage selon l'une quelconque des revendications précédentes 1 à 7 **caractérisé en ce que** le relief prévu sur la face destinée à être en contact avec un siège de bourrelet est continu d'une extrémité à l'autre de l'insert (4).

9. - Dispositif de démontage comprenant deux demi inserts (401, 402), chacun des demi inserts étant définis selon l'une quelconque des revendications précédentes, ces demi inserts (401, 402) étant reliés entre eux par une partie intermédiaire (5), ladite partie intermédiaire étant en creux par rapport aux faces des demi inserts destinées à être en contact avec un siège de bourrelet.

10. - Dispositif de démontage selon la revendication 9 **caractérisé en ce que** la partie intermédiaire (5) est prolongée transversalement par une extension (51) destinée à protéger la saillie de la jante sur laquelle est monté ledit dispositif, et **en ce qu'**une partie de renforcement (6) est prévue pour assurer la liaison mécanique entre la partie intermédiaire (5) et chaque demi insert (401, 402).

## Claims

1. - Device designed for demounting a tyre from a rim (2) at least one seat (21) of which is inclined outwards, this seat being provided axially towards the outside with a projection (22) of small height, the device being in the form of an insert (4) of length (L) with three main faces and whose cross-section in a transverse plane is triangular overall with a contour formed by two long sides (41, 42) and a short side (43), the angle made by the long sides being close to the angle between the rim seats and the rotation axis, the length of the short side (43) being essentially equal to the height of the projection (22) of the outward-inclined rim seat (21), this insert (4) being **characterised in that** the face (42) of the said insert intended to come in contact with a seat (11) of a bead (1) is provided with at least one relief (410) designed to interact with the bead seat (11) so as to keep the insert (4) engaged between the bead (1) and the rim (2) during the phase of introducing the said demounting insert between the said bead seat and the said rim.

2. - Demounting device according to Claim 1, **characterised in that** the relief (410) consists of a groove extending in the direction of the length of the insert (4), this groove having a width equal to the distance between the ends (A) and (B) of the long side (41) intended to be in contact with a bead seat (11).

3. - Demounting device according to Claim 1, **characterised in that** the relief (410) consists of a groove whose width is smaller than the distance between the ends (A) and (B) of the long side (41) intended to be in contact with a bead seat.

4. - Demounting device according to Claim 3, **characterised in that** viewed in cross-section, the groove (410) is located between the middle of the long side intended to be in contact with a bead seat and the short side.

5. - Demounting device according to Claims 3 or 4, **characterised in that** the groove (410) is formed by two protuberances (411, 412), the said protuberances being in relief on the face intended to be in contact with a bead seat (11).

6. - Demounting device according to any of the preceding Claims 1 to 5, **characterised in that** at least one of the ends of the insert (4) has a bevelled portion (51), the angle between the said bevel and the direction of the insert's largest dimension being at least equal to 10° and at most equal to 70°.

7. - Demounting device according to Claim 6, **characterised in that** the angle of the bevel (51) is essentially equal to 45°.

8. - Demounting device according to any of the preceding Claims 1 to 7, **characterised in that** the relief provided on the face intended to be in contact with a bead seat is continuous from one end of the insert (4) to the other end.

9. - Demounting device comprising two half-inserts (401, 402), each of the half-inserts being defined according to any of the preceding claims, these half-inserts (401, 402) being connected to one another by an intermediate portion (5), the said intermediate portion being set back relative to the faces of the half-inserts intended to be in contact with a bead seat.

10. - Demounting device according to Claim 9, **characterised in that** the intermediate portion (5) is extended transversely by an extension (51) designed to protect the projection of the rim to which the said device is fitted, and **in that** a reinforcement portion (6) is provided to ensure a mechanical connection between the intermediate portion (5) and each half-insert (401,402).

## Patentansprüche

1. Vorrichtung zum Demontieren eines Reifens von einer Felge (2), von der mindestens eine Schulter (21) nach außen geneigt ist, wobei diese Schulter mit einem in Axialrichtung nach außen weisenden Vorsprung (22) geringer Höhe versehen ist und diese Vorrichtung die Form eines Einsatzes (4) der Länge (L) hat, welcher drei Hauptflächen aufweist und dessen Querschnitt allgemein dreieckig ist mit einem aus zwei langen Seiten (41, 42) und einer kurzen Seite (43) gebildeten Umriss, wobei der durch die langen Seiten gebildete Winkel ungefähr gleich dem Winkel ist, der durch die Schultern der Felge mit der Drehachse gebildet ist, und wobei die Länge der kurzen Seite (43) im Wesentlichen gleich der Höhe des Vorsprungs (22) der nach außen geneigten Schulter (21) der Felge ist, wobei dieser Einsatz (4) **dadurch gekennzeichnet ist, dass** die Fläche (42) des Einsatzes, die dazu vorgesehen ist, mit einer Schulter (11) des Wulstes (1) einen Kontakt herzustellen, mit mindestens einem Relief (410) versehen ist, das dazu bestimmt ist, mit dieser Schulter (11) des Wulstes so zusammenzuwirken, dass der Einsatz (4) zwischen diesem Wulst (1) und der Felge (2) während der Phase des Einführens des Einsatzes (4) zwischen der Schulter des Wulstes und der Felge in Eingriff gehalten wird.

2. Demontagevorrichtung nach Anspruch 1, **dadurch gekennzeichnet, dass** das Relief (410) aus einer sich in der Längsrichtung des Einsatzes (4) erstreckenden Nut besteht, wobei diese Nut eine Breite aufweist, die gleich dem Abstand zwischen den Enden (A) und (B) der langen Seite (41) ist, welche dazu vorgesehen ist, einen Kontakt mit einer Schulter (11) des Wulstes herzustellen.

3. Demontagevorrichtung nach Anspruch 1, **dadurch gekennzeichnet, dass** das Relief (410) aus einer Nut besteht, deren Breite geringer als der Abstand zwischen den Enden (A) und (B) der langen Seite (41) ist, welche dazu vorgesehen ist, einen Kontakt mit einer Schulter des Wulstes herzustellen.

4. Demontagevorrichtung nach Anspruch 3, **dadurch gekennzeichnet, dass** die Nut (410) im Querschnitt gesehen zwischen der Mitte der langen .Seite, welche dazu vorgesehen ist, einen Kontakt mit einer Schulter des Wulstes herzustellen, und der kurzen Seite angeordnet ist.

5. Demontagevorrichtung nach Anspruch 3 oder 4, **dadurch gekennzeichnet, dass** die Nut (410) aus zwei Vorkragungen (411, 412) gebildet wird, wobei die Vorkragungen im Relief auf der Fläche gebildet sind, die dazu vorgesehen ist, einen Kontakt mit einer Schulter (11) des Wulstes herzustellen.

6. Demontagevorrichtung nach einem der vorangehenden Ansprüche 1 bis 5, **dadurch gekennzeichnet, dass** mindestens ein Ende des Einsatzes (4) einen abgeschrägten Teil (51) umfasst, wobei der Winkel der Abschrägung und der Richtung der größten Abmessung des Einsatzes mindestens gleich 10° und höchstens 70° beträgt.

7. Demontagevorrichtung nach Anspruch 6, **dadurch gekennzeichnet, dass** der Winkel der Abschrägung (51) im Wesentlichen gleich 45° ist.

8. Demontagevorrichtung nach einem der vorangehenden Ansprüche 1 bis 7, **dadurch gekennzeichnet, dass** das auf der Fläche, die dazu vorgesehen ist, einen Kontakt mit einer Schulter des Wulstes herzustellen, vorgesehene Relief von einem zum anderen Ende des Einsatzes (4) fortgesetzt wird.

9. Demontagevorrichtung, umfassend zwei Halbeinsätze (401, 402), wobei jeder der Halbeinsätze nach einem der vorangehenden Ansprüche definiert ist, wobei diese Halbeinsätze (401, 402) untereinander mit einem Zwischenteil (5) verbunden sind, wobei sich der Zwischenteil bezüglich der Flächen der Halbeinsätze, die dazu vorgesehen sind, einen Kontakt mit einer Schulter des Wulstes herzustellen, zurückgesetzt ist.

10. Demontagevorrichtung nach Anspruch 9, **dadurch gekennzeichnet, dass** das Zwischenteil (5) in Querrichtung durch ein Ansatzstück (51) verlängert ist, welches dazu vorgesehen ist, den Vorsprung der Felge, auf der die Vorrichtung montiert wird, zu schützen, und **dadurch**, dass ein Teil der Verstärkung (6) dazu vorgesehen ist, die mechanische Verbindung zwischen dem Zwischenteil (5) und jedem Halbeinsatz (401, 402) sicherzustellen.
